# EUROPEAN PATENT SPECIFICATION

(11) **EP 0 384 434 B1**
(45) Date of publication and mention of the grant of the patent: **26.07.1995**
(21) Application number: 90103348.0
(22) Date of filing: 21.02.1990
(51) Int. Cl.: G03G 15/04, G03B 27/72

(54) **Image forming equipment**
Bilderzeugungseinrichtung
Installation de formation d'images

(30) Priority: 22.02.1989 JP 42582/89
(43) Date of publication of application: 29.08.1990
(73) Proprietor: MITA INDUSTRIAL CO. LTD., Osaka-shi Osaka 540 (JP)
(72) Inventor: Kunihiro, Onishi, Moriguti-shi, Osaka (JP); Akihiro, Takada, Neyagawa-shi, Osaka (JP); Kaneyuki, Sakamoto, Kashihara-shi Nara (JP)
(74) Representative: Schwan, Gerhard, Dipl.-Ing.

(56) References cited:
- DE-A- 3 133 168
- US-A- 3 330 180
- US-A- 4 853 739
- US-A- 4 887 122
- XEROX DISCLOSURE JOURNAL, vol. 10, no. 5, September 1985, Stamford, CT, US, pages 297-298; STEPHEN C.CORONA: "Fluorescent lamp illumination control"
- PATENT ABSTRACTS OF JAPAN, vol. 13, no. 165 (P-860)(3513), 20 April 1989 & JP-A-64002077
- PATENT ABSTRACTS OF JAPAN, vol. 13, no. 165 (P-860)(3513), 20 April 1989 & JP-A-64002076

## Description

The present invention relates to an image forming equipment of a document copying machine or the like in which a fluorescent lamp is utilized as light source, and in particular to an image forming equipment which can control the light energy of a fluorescent lamp to the optimal value at all times.

In a document copying machine which for instance is one of this kind of image forming equipments, light which is emitted from a fluorescent lamp is directed to an image surface of a document placed on the document table, and an optical image effected by the reflection light is imaged on a photoconductor. As the surface of the photoconductor is charged in advance to a fixed potential, an electrostatic latent image which corresponds to the document image is formed, thereby causing this document image to be read. The electrostatic latent image is developed, transferred to a transcribing paper and fixed by a known duplicating process. After that, a required duplicated image can be obtained accordingly.

In a prior document copying machine of this type (Japanese Laid-Open Pat. Pub. Sho-57-40277) the fluorescent lamp is so arranged that the lengthwise direction thereof is placed along with the width direction of the document, and a detector, for instance a photo diode (light energy detecting means), which can detect the light energy is provided at the end portion of the fluorescent lamp in the vicinity of the latter. The light energy of the fluorescent lamp is always measured by the detector and is so controlled through feed-back that the light energy can be kept at a fixed value regardless of a temperature change, time variation, or the like of the fluorescent lamp.

During warming up of the fluorescent lamp from a low to a high temperature the light energy emitted by the central part of the lamp differs from the light energy emitted by the end portion in the lengthwise direction of the fluorescent lamp. Namely, the light energy emitted at the end portion of the fluorescent lamp is lower than that emitted at the central portion thereof. When the fluorescent lamp is somewhat warmed as result of copying actions, there is almost no difference in the respective light energy, thereby causing almost no problem to occur. However, especially in warming up from power OFF to ON of the fluorescent lamp, the light energy may be greatly influenced by the ambient temperature.

As the detector for detecting the light energy of the fluorescent lamp is provided at the end portion thereof, the light energy of a lower value is accordingly detected on warming up. Furthermore, as the fluorescent lamp is controlled through feed-back according to the lower value, a current which is larger than necessary is given to the fluorescent lamp. As a result, the central portion of the fluorescent lamp is warmed up earlier than the end portion thereof, thereby causing the light energy at the central portion to be apt to be overshot. Thereafter, the light energy at the end portion of the fluorescent lamp is gradually increased in accompanying with the temperature rise, thereby causing the feed-back current to be decreased, and finally nearly uniform light energy is able to be obtained in the lengthwise direction of the fluorescent lamp.

Thus, it takes a little longer period of time, for instance, about 30 seconds as the stabilization time of the fluorescent lamp after the warming-up thereof. Therefore, if a copying action is carried out in the meantime, such an inconvenience as an overprinted or excessively exposed copying image may occur.

Furthermore, an image forming equipment comprising an elongated fluorescent lamp which is arranged in the width direction of a document to be copied by using light reflected from the surface of the document during a copying mode, the lamp being adapted to be switched between a power ON state and a power OFF state; light energy detecting means disposed to receive light from an intermediate portion of the fluorescent lamp and to deliver a signal which is representative of the light energy emitted by the fluorescent lamp; and control means for controlling the flow of current through and thus the light energy emitted by the fluorescent lamp as a function of the signal delivered by the light energy detecting means, the control means being designed to cause the fluorescent lamp, whilst in the power ON state, to emit in the copying mode a predetermined higher light energy level and to emit in a preheating mode during a preheat period a predetermined lower light energy level, is known from JP-A-64-2077.

It is an object of the invention to provide an image forming equipment having such a function that the light energy of a fluorescent lamp can be properly controlled to the optimal level at all times.

The present invention provides for an image forming equipment comprising an elongated fluorescent lamp which is arranged in the width direction of a document to be copied by using light reflected from the surface of the document during a copying mode, said lamp being adapted to be switched between a power ON state and a power OFF state; light energy detecting means disposed to receive light from said fluorescent lamp and to deliver a signal which is representative of the light energy emitted by said fluorescent lamp; and control means for controlling the flow of current through and thus the light energy emitted by said fluorescent lamp as a function of the signal deliverd by said light energy detecting means, said control means being designed to cause said fluorescent lamp, whilst in the power ON state, to emit in said copying mode a predetermined higher light energy level and to emit in a preheating mode during a preheat period a predetermined lower light energy level, which equipment is
please use normal characters, when printing the patent specification **characterized in that**
said light energy detecting means is diposed at an end portion of said fluorescent lamp; and
said control means includes
a lamp ON/OFF counter
which, when said lamp is in said power ON state, is incremented from a zero count by a predetermined number of counts per time unit, and
which, when said lamp is in said power OFF state, is decremented by a predetermined number of counts per time unit from the count reached during a previous power ON state; and
timer means for starting a preheat period of predetermined duration when said lamp ON/OFF counter is at or reaches a zero count.

In the present context the term "copying mode" means the mode or time period during which the actual copying operation takes place, irrespective of the fixing means of the image forming apparatus having or having not reached the fixing temperature. The term "preheating mode" means the mode or time period during which the fluorescent lamp is preheated by a flow of current which causes the lamp to emit a relatively low light energy level, i.e. a light energy level which is less than the energy level emitted by the lamp in the copying mode.

In the image forming equipment disclosed by the invention the level of the current flowing through the lamp is so controlled that the light energy of the fluorescent lamp can become an appointed value in the power ON state thereof during copying actions, and the fluorescent lamp is preheat-controlled in the preheating mode after the power is switched on. As a result, it is possible to control the light energy of the fluorescent lamp to the optimal level at all times without supplying a larger current than necessary to the fluorescent lamp during copying actions.

The above, and other objects, features and advantages of the present invention, will become apparent from the following description taken in conjunction with the accompanying drawings, in which
- Fig. 1: is a block diagram of a control system pertaining to a fluorescent lamp of an image forming equipment according to a preferred embodiment of the invention;
- Fig. 2(a): is a flow chart showing the main procedure of control of the above fluorescent lamp;
- Fig. 2(b): is a flow chart showing the control procedure of the fluorescent lamp ON/OFF counter value; and
- Fig. 2(c): is a flow chart showing the control procedure of the light energy control value of the fluorescent lamp.

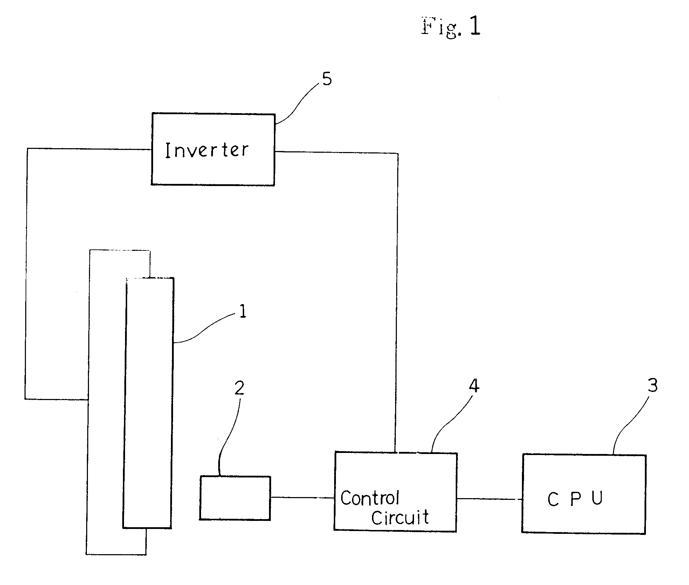

Fig. 1 shows a block diagram of a control system pertaining to a fluorescent lamp of an image forming equipment according to a preferred embodiment of the invention.

In an image forming equipment according to this preferred embodiment, as shown in Fig. 1, light energy detecting means, for example a photo diode 2, for detecting the light energy of the fluorescent lamp 1 is provided at the end portion of the fluorescent lamp 1 located in the width direction of a document (not illustrated). The photo diode 2 is connected to a control circuit 4 which is controlled by a CPU 3. The fluorescent lamp 1 is controlled through feed-back by the control circuit 4 by way of an inverter 5. In this case, the level of current flowing through the fluorescent lamp 1 is so controlled by the control circuit 4 during a preheating mode, after the power is turned ON, that the light energy of the fluorescent lamp 1 can become an appointed value according to the power ON state of the fluorescent lamp 1 during the copying mode, and that the fluorescent lamp 1 can be preheated.

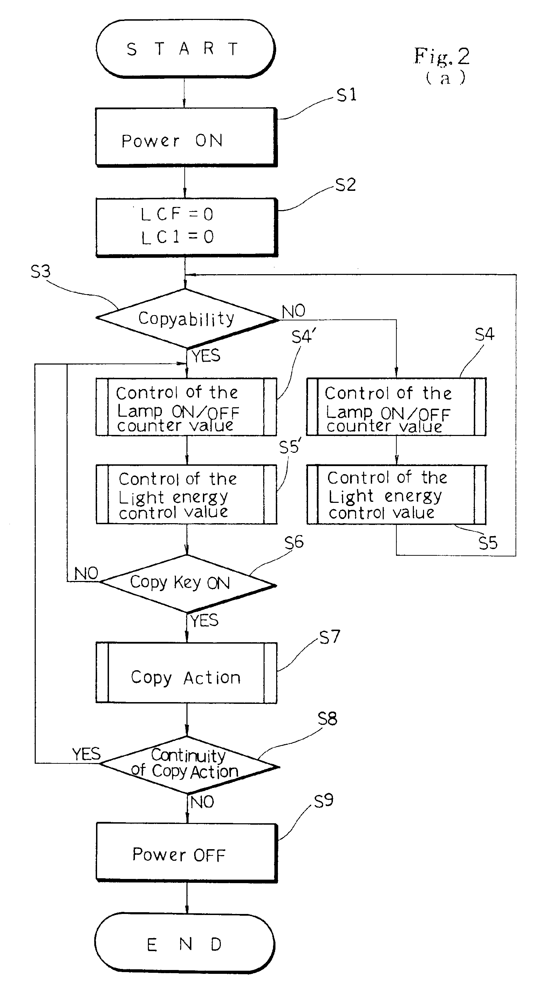

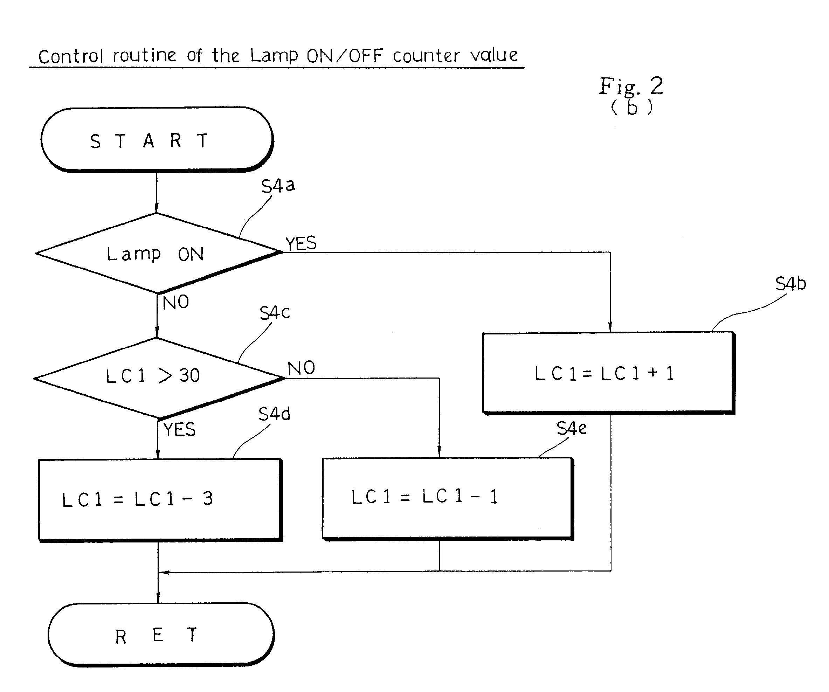

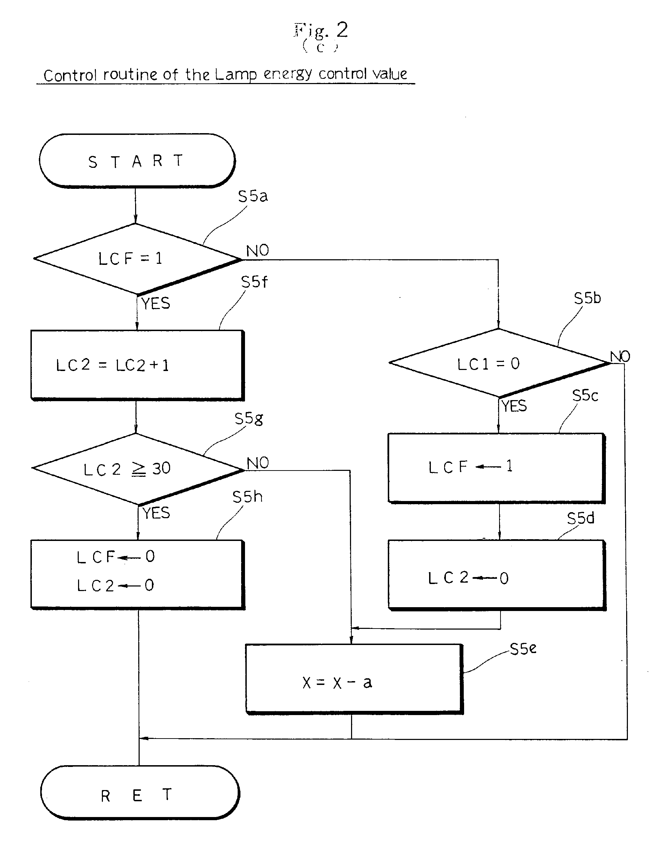

Subsequently, the ensuing specification describes the detailed procedure of a control example when so controlling the fluorescent lamp 1 as indicated above, with reference to Fig. 2(a), Fig. 2(b) and Fig. 2(c).

In each of the above Figures, S1, S2 and so on show each step of action.

At first, as the main power in the equipment body (not illustrated) is switched on (step S1), both a lamp control flag LCF and a lamp ON/OFF counter LC1 are reset to zero (0) in the step S2. Immediately after the main power is turned ON, the power of the fluorescent lamp 1 is in the OFF state. Afterwards when the copying action or the preheating control is started, the power of the fluorescent lamp 1 is turned ON.

As described later, the lamp control flag LCF is for showing whether or not it is necessary to execute the preheating control of the fluorescent lamp 1 during a preheating mode after the power is turned ON, according to the length of the ON time of the fluorescent lamp 1 in the copying or preheating mode, and when the set value of the lamp control flag LCF is one (1), the preheating control is executed.

The lamp ON/OFF counter LC1, which is utilized to represent the temperature of the fluorescent lamp 1, counts up (i.e. is incremented) by one (1) per second whenever the fluorescent lamp 1 is ON (step S4b). The counter LC1 counts down (i.e. is decremented) by three (3) per second during the power OFF state (step S4d) whenever lamp 1 is OFF and when the numerical value of the lamp ON/OFF counter LC1 exceeds 30 counts, whereas the counter LC1 counts down (is decremented) by one (1) per second during the power OFF state (step S4d) whenever lamp 1 is OFF and when the numerical value of the counter LC1 is less than 30 counts.

The degree of the temperature drop when the fluorescent lamp 1 is switched OFF with the temperature thereof being comparatively high after more than 30 seconds since turning ON of the fluorescent lamp 1, is considerably larger than the degree of the temperaure drop when the fluorescent lamp 1 is turned OFF at a comparatively low temperature of the lamp within 30 seconds since turning ON the same. The reason why the numerical value of decrementing the lamp ON/OFF counter LC1 differs in above and below 30 counts as border is to express the degree of the temperature drop.

Therefore, the period of time corresponding to 1 count of the lamp ON/OFF counter LC1 can properly vary, taking into consideration the features of the fluorescent lamp, the ambient temperature, the time variation, and the like. In this embodiment a time period of one second corresponds to one count.

Subsequently, in step S3, it is judged whether or not a copying action is possible according to whether or not the fixing temperature reaches a suitable value and is stabilized. In case that it is judged that the fixing temperature is not stabilized and the copying action is not possible, the value of the lamp ON/OFF counter LC1 is controlled in step S4 (as described later). Consecutively, in step S5, the light energy control value of the above fluorescent lamp 1 is controlled (as described later). Each of the above controls is continued until it is judged in step S3 that the copying action is possible.

In the control (step S4) of the value of the lamp ON/OFF counter LC1, as shown in Fig. 2(b), it is judged in step S4a whether or not the fluorescent lamp 1 is in the power ON state. When it is judged in step S4a that the fluorescent lamp 1 is in the power ON state (that is, when the power of the fluorescent lamp 1 is in the ON state for the preheating control as described later), in step S4b, the lamp ON/OFF counter LC1 is incremented by one count per second.

When it is judged in step S4a that the fluorescent lamp 1 is in the power OFF state, for example, in the case that the fluorescent lamp 1 is not in the preheating mode, but rather is still in the power OFF state immediately after the power is turned ON, it is judged in step S4c whether or not the count of the lamp ON/OFF counter LC1 is larger than 30.

When it is judged in step S4c that the count of the lamp ON/OFF counter LC1 is larger than 30, that is, when the period of time for which the power is in ON state is continued for more than 30 seconds at the point of time when the fluorescent lamp 1 is turned OFF, the lamp ON/OFF counter LC1 is decremented by three counts per second in step S4d. When it is judged in step S4c that the count of the lamp ON/OFF counter LC1 is less than 30 or when it is judged that the lighting time of the fluorescent lamp 1 is less than 30 seconds since the beginning, the count of the lamp ON/OFF counter LC1 is decremented by one count per second in step S4e.

The power ON and OFF time and thus the temperature of the fluorescent lamp 1 is measured in the above manner.

In the control of the light energy level delivered by the flurescent lamp 1 during the preheating mode in the next step S5, as shown in Fig. 2(c), it is judged in step S5a whether or not the set value of the lamp control flag LCF is one (1). When it is judged in step S5a that the set value of the lamp control flag LCF is not one (1), for example, when both the value of the lamp control flag LCF and the count of the lamp ON/OFF counter LC1 are zero (0) immediately after the power is turned ON in the step S1 and subsequently in step S2 the lamp control flag LCF and the lamp ON/OFF counter LC1 are reset to zero (0), respectively, it is judged in step S5b whether or not the set count of the lamp ON/OFF counter LC1 is zero (0).

When it is judged in step S5b that the set count of the lamp ON/OFF counter LC1 is zero (0) (namely, when the temperature of the fluorescent lamp 1 is sufficiently low), one (1) is inputted in the lamp control flag LCF in step S5c, and the lamp control counter LC2 is reset to zero (0) in step S5d, thereby starting a preheat period.

The lamp control counter LC2 is provided for measuring the period of time for which the preheating control is effected for the fluorescent lamp 1. In this embodiment, the preheating control is so set that it can be executed consecutively for 30 seconds.

Subsequently, in step S5e, a light energy control value (X-a) for the fluorescent lamp 1 is outputted, thereby causing the fluorescent lamp 1 to be turned ON and to be preheat-controlled.

In this case, the above-mentioned light energy control value (X-a) is outputted as a value which is sufficient to moderately preheat the fluorescent lamp 1, although that value is not enough to make copying actions. That is, the light energy control value (X-a) is the value which defines that the constant "a" is subtracted from the light energy control value X used during the ordinary copying mode.

When the state that one (1) is inputted in the lamp control flag LCF in the above step S5c is detected in step S5a, the lamp control counter LC2 is incremented by one (1) per second in step S5f.

The light energy control value (X-a) for the fluorescent lamp 1 is outputted in step S5e until the count of the lamp control counter LC2 reaches 30 (that is, for 30 seconds) (step S5g), thereby causing the fluorescent lamp 1 to be turned ON and the preheat-control to be continued.

When in step S5g it is determined that the lamp control counter LC2 reaches the count 30, both the lamp control flag LCF and the lamp control counter LC2 are reset to zero (0) in step S5h, and the fluorescent lamp 1 is turned OFF. As a result, the preheat control for the fluorescent lamp 1 ends.

As the fluorescent lamp 1 is turned OFF after the end of the preheat period, "NO" is jugded in step S4a in Fig. 2(b). At this time, as the count of the lamp ON/OFF counter LC1 equals 30, "NO" is judged in step S4c, and the lamp ON/OFF counter LC1 is decremented by one per second in step S4e. In this way, one (1) per second is subtracted from the count of the lamp ON/OFF counter LC1 till the fluorescent lamp 1 is turned ON by the preheating control. When the count of the lamp ON/OFF counter LC1 reaches 0, "YES" is judged in step S5b, and the preheating mode in accordance with the value "X-a" is resumed for 30 seconds (step S5e). Thus, the preheat mode is repeated every 30 seconds till the copying action is started by operation of the copy key.

In the period of time from having judged that the copying action is possible in step S3 till judging that the COPY key has been turned ON in step S6, the lamp ON/OFF counter value is controlled in step S4′ as well as in the above step S4. Subsequently, the preheating control for the fluorescent lamp 1 is executed in step S5′ as well as in the above step S5.

The above description relates to the state in which the copying action (including the scanning action) is not yet executed. The electric voltage corresponding to the light energy control value X for the power of fluorescent lamp 1 is supplied when the COPY key is turned ON, thereby causing the fluorescent lamp 1 to be heated. The light energy control value X is controlled, thereby causing the detected light energy to be the appointed value as mentioned in the description of the prior art.

As the fluorescent lamp 1 is preheated by the preheating control before the COPY key is turned ON in this embodiment, the light energy control value is not set beyond the demand. Therefore no overprinted or excessively exposed copying image occurs in the early period of the copying mode. The lamp ON/OFF counter LC1 is incremented by one per second whenever the fluorescent lamp 1 is lighted.

When it is judged in step S6 that the COPY key has been turned ON, the power sources of the fluorescent lamp 1, the motor and the like are promptly turned ON in step S7, thereby causing the copying action to be started. At this time, the electric voltage corresponding to the light energy control value X is supplied to fluorescent lamp 1. As fluorescent lamp 1 is kept ON whenever the copying action is carried out, incrementing of the lamp ON/OFF counter LC1 by one per second in the step S4b is continued. When the lamp control flag LCF is reset to the value (0) because preheating of course is unnecessary during the copying action, "NO" is judged in step S5a. Moreover, as incrementing of the lamp ON/OFF counter LC1 continous, "NO" is judged in step S5b. Therefore the preheating control is not executed. However, the upper limit value for the count of the lamp ON/OFF counter LC1 is set usually because the temperature of the fluorescent lamp 1 does not exceed a fixed value even if the copying action was kept up for a long time.

"NO" is judged in step S4a when the copying action comes to an end, and decrementing of the lamp ON/OFF counter LC1 is altered according to the judgement whether the count of the lamp ON/OFF counter LC1 exceeds 30 or not (steps S4d, S4e).

When the lamp ON/OFF counter LC1 reaches the count (0) in consequence of the advance of the computing, a preheating process similar to that described above is started (step S5e). Therefore, as the copying action can be started at all times in the state that the fluorescent lamp 1 is always preheated to a certain extent, such inconvenience as an overprinted or excessively exposed copying image does not occur.

The power sources of the fluorescent lamp 1, the motor and the like are turned OFF on demand after the copying action is terminated in step S7. In the case that the copying is not consecutively carried out (step S8), the main power should be turned OFF in step 9.

In the equipment according to the embodiment described above, the level of current flow is so controlled during the preheat period, after the power is turned ON, that the light energy emitted by the fluorescent lamp 1 in the power ON state thereof can be an appointed value during copying actions. Thereby, the light energy emitted by the fluorescent lamp 1 can be controlled at all times to the optimal value on executing copying actions without supplying to the fluorescent lamp 1 any larger current than necessary.

## Claims

1. An image forming equipment comprising an elongated fluorescent lamp (1) which is arranged in the width direction of a document to be copied by using light reflected from the surface of the document during a copying mode, said lamp (1) being adapted to be switched between a power ON state and a power OFF state; light energy detecting means (2) disposed to receive light from said fluorescent lamp (1) and to deliver a signal which is representative of the light energy emitted by said fluorescent lamp (1); and control means (3, 4, 5) for controlling the flow of current through and thus the light energy emitted by said fluorescent lamp (1) as a function of the signal delivered by said light energy detecting means (2), said control means (3, 4, 5) being designed to cause said fluorescent lamp (1), whilst in the power ON state, to emit in said copying mode a predetermined higher light energy level and to emit in a pre-heating mode during a pre-heat period a predetermined lower light energy level,
**characterized in that**
said light energy detecting means (2) is disposed at an end portion of said fluorescent lamp (1); and
said control means (3, 4, 5) includes
a lamp ON/OFF counter (LC1)
which, when said lamp (1) is in said power ON state, is incremented from a zero count by a predetermined number of counts per time unit, and
which, when said lamp (1) is in said power OFF state, is decremented by a predetermined number of counts per time unit from the count reached during a previous power ON state; and
timer means (LC2) for starting a pre-heat period of predetermined duration when said lamp ON/OFF counter (LC1) is at or reaches a zero count.

2. The image forming equipment according to claim 1 wherein said lamp ON/OFF counter (LC1) counts up one per second whenever said lamp (1) is in said power ON state, counts down three per second whenever said lamp (1) is in said power OFF state and the count of said counter is greater than 30, and counts down one per second whenever said lamp (1) is in said power OFF state and the count of said counter is less than 30.

## Patentansprüche

1. Bilderzeugungseinrichtung mit einer langgestreckten Fluoreszenzlampe (1), die in der breiten Richtung einer Vorlage angeordnet ist, die unter Nutzung von Licht zu kopieren ist, das während eines Kopierbetriebes von der Oberfläche der Vorlage reflektiert wird, wobei die Lampe (1) zwischen einem eingeschalteten Zustand und einem ausgeschalteten Zustand umschaltbar ist; einer Lichtenergie-Detektoranordnung (2), die so angeordnet ist, daß sie Licht von der Fluoreszenzlampe (1) empfängt und ein Signal abgibt, das für die von der Fluoreszenzlampe (1) emittierte Lichtenergie repräsentativ ist; und einer Steueranordnung (3, 4, 5) zum Steuern des Stromflusses durch die Fluoreszenzlampe (1) und damit der von dieser emittierten Lichtenergie als eine Funktion des von der Lichtenergie-Detektoranordnung (2) abgegebenen Signals, wobei die Steueranordnung (3, 4, 5) so ausgelegt ist, daß sie die Fluoreszenzlampe (1), während diese sich im eingeschalteten Zustand befindet, veranlaßt, in dem Kopierbetrieb einen vorbestimmten höheren Lichtenergiepegel zu emittieren und in einem Vorheizbetrieb während einer Vorheizperiode einen vorbestimmten niedrigeren Lichtenergiepegel zu emittieren,
**dadurch gekennzeichnet, daß**
die Lichtenergie-Detektoranordnung (2) an einem Endabschnitt der Fluoreszenzlampe (1) angeordnet ist; und
die Steueranordnung (3, 4, 5) versehen ist mit
einem Lampen-EIN/AUS-Zähler (LC1)
der, wenn sich die Lampe (1) in dem eingeschalteten Zustand befindet, von einem Null-Zählwert um eine vorbestimmte Anzahl von Zählwerten pro Zeiteinheit inkrementiert wird, und
der, wenn sich die Lampe (1) in dem ausgeschalteten Zustand befindet, von dem während eines vorhergehenden eingeschalteten Zustandes erreichten Zählwert um eine vorbestimmte Anzahl von Zählwerten pro Zeiteinheit dekrementiert wird; und
eine Zeitgeberanordnung (LC2) zum Starten einer Vorheizperiode von vorbestimmter Dauer, wenn der Lampen-EIN/AUS-Zähler (LC1) sich auf einem Null-Zählwert befindet oder einen Null-Zählwert erreicht.

2. Bilderzeugungseinrichtung nach Anspruch 1, bei welcher der Lampen-EIN/AUS-Zähler (LC1) um einen Zählwert pro Sekunde vorwärts zählt, wenn sich die Lampe (1) in dem eingeschalteten Zustand befindet, um drei Zählwerte pro Sekunde rückwärts zählt, wenn sich die Lampe (1) in dem ausgeschalteten Zustand befindet und der Zählwert des Zählers größer als 30 ist, und um einen Zählwert pro Sekunde rückwärts zählt, wenn sich die Lampe (1) in dem ausgeschalteten Zustand befindet und der Zählwert des Zählers kleiner als 30 ist.

## Revendications

1. Installation de formation d'images comprenant une lampe fluorescente (1) de forme allongée qui est disposée dans le sens de la largeur d'un document à copier, utilisant la lumière réfléchie par la surface du document au cours d'un mode de copiage, ladite lampe (1) étant apte à être commutée entre un état de mise en service et un état de mise hors service; un moyen (2) de détection d'énergie lumineuse disposé pour recevoir la lumière en provenance de ladite lampe fluorescente (1) et à délivrer un signal qui est représentatif de l'énergie lumineuse émise par ladite lampe fluorescente (1); et des moyens de commande (3, 4, 5) pour commander la circulation du courant dans ceux-ci et donc l'énergie lumineuse émise par ladite lampe fluorescente (1) comme une fonction du signal délivré par ledit moyen (2) de détection d'énergie lumineuse, lesdits moyens de commande (3, 4, 5) étant destinés à conduire la lampe fluorescente (1), tandis qu'elle est dans l'état en service, à émettre dans ledit mode de copiage un niveau d'énergie lumineuse supérieur prédéterminé et à émettre dans un mode de préchauffage, au cours d'une période de préchauffage, un niveau d'énergie lumineuse inférieur prédéterminé,
**caractérisé en ce que**
ledit moyen (2) de détection d'énergie lumineuse est disposé au niveau d'une partie d'extrémité de ladite lampe fluorescente (1); et
ledit moyen de commande (3, 4, 5) comporte
un compteur (LC1) de mise en/hors service de la lampe
qui, lorsque ladite lampe (1) est dans ledit état en service, est incrémenté, à partir d'un compte zéro, d'un nombre prédéterminé de comptes par unité de temps, et qui, lorsque ladite lampe (1) est dans ledit état hors service, est décrémenté d'un nombre prédéterminé de comptes par unité de temps à partir du compte atteint au cours d'un précédent état de mise en service; et
un moyen (LC2) formant minuteur pour amorcer une période de préchauffage de durée prédéterminée lorsque ledit compteur (LC1) de mise en/hors service de la lampe est au compte zéro ou atteint celui-ci.

2. Installation de formation d'images selon la revendication 1 dans lequel ledit compteur (LC1) de mise en/hors service de la lampe compte à raison d'un par seconde lorsque ladite lampe (1) est dans ledit état de mise en service, et décompte à raison de trois par seconde lorsque ladite lampe (1) est dans ledit état de mise hors service et que le compte dudit compteur est supérieur à 30, et décompte à raison d'un par seconde lorsque ladite lampe (1) est dans ledit état de mise hors service et que le compte dudit compteur est inférieur à 30.
